# EUROPEAN PATENT SPECIFICATION

(11) **EP 3 760 446 B1**
(45) Date of publication and mention of the grant of the patent: **18.06.2025**
(21) Application number: 19760670.0
(22) Date of filing: 31.01.2019
(51) Int. Cl.: G06F 3/12, B41J 3/407, B41J 2/01, B41J 21/00, B31B 70/88, H04N 1/00, H04N 1/23

(54) **DATA PROCESSING METHOD, DATA RECORDING METHOD, FLEXIBLE PACKAGE MANUFACTURING METHOD, AND IMAGE RECORDING DEVICE**
DATENVERARBEITUNGSVERFAHREN, DATENAUFZEICHNUNGSVERFAHREN, VERFAHREN ZUR HERSTELLUNG EINER FLEXIBLEN VERPACKUNG UND BILDAUFZEICHNUNGSVORRICHTUNG
PROCÉDÉ DE TRAITEMENT DE DONNÉES, PROCÉDÉ D'ENREGISTREMENT DE DONNÉES, PROCÉDÉ DE FABRICATION DE BOÎTIER SOUPLE ET DISPOSITIF D'ENREGISTREMENT D'IMAGE

(30) Priority: 28.02.2018 JP 2018034126
(43) Date of publication of application: 06.01.2021
(73) Proprietor: SCREEN Holdings Co., Ltd., Kyoto-shi, Kyoto 602-8585 (JP)
(72) Inventor: ICHIOKA Yoshikazu, Kyoto-shi, Kyoto 602-8585 (JP); KAMON Hiroaki, Kyoto-shi, Kyoto 602-8585 (JP)
(74) Representative: Kilian Kilian & Partner mbB
(86) International application number: PCT/JP2019/003373
(87) International publication number: WO 2019/167536

(56) References cited:
- WO-A1-2008/071631
- WO-A1-2017/051146
- JP-A- 2007 160 784
- JP-A- 2009 080 791
- JP-A- 2011 148 133
- JP-A- 2016 132 154
- US-A1- 2011 069 329

## Description

### Technical Field

The present invention relates to a data processing method, a data recording method, a flexible packaging manufacturing method, and an image recording apparatus.

### Background Art

It is conventionally known that, in a data processing method for creating a job to be input to a printing apparatus, an arrangement of a plurality of images to be printed on one page (print unit), so-called ganging, is performed. This type of data processing method is disclosed in Patent Literature 1, for example.

According to the data processing method disclosed in Patent Literature 1, a plurality of printable objects (jobs to be printed) can be placed within a print layout (one page) in consideration of their widths and heights. Further, repeatedly printing this print layout allows the plurality of printable objects to be printed collectively and efficiently.

### Citation List

### Patent Literature

Patent Literature 1: JP 2014-502387 A
Further prior art is known from WO 2017/051146 A1, US 2011/069329 A1, JP 2016 132154 A, and JP 2007 160784 A.

### Summary of Invention

### Technical Problem

However, when the print layout disclosed in Patent Literature 1 is repeatedly printed, there is room for improvement in that paper waste existing in the print layout occurs every time the print layout is printed.

In particular, assuming that flexible packaging is manufactured from prints obtained by repeatedly printing the print layout disclosed in Patent Literature 1, when paper waste occurs as described above, post-processes such as cutting (fusion-cutting) become complicated. More specifically, for example, when the printable objects are printed discontinuously in the middle in a sub-scanning direction (a direction in which a base material is fed in printing), timing of the post-processes such as fusion-cutting is made discontinuous and irregular, making the post-processes complicated. The above-described problems become more serious particularly in a case where flexible packaging is mass-produced.

The present invention has been made in view of the above circumstances, and a potential object of the present invention is to provide a data processing method, a data recording method, a flexible packaging manufacturing method, and an image recording apparatus that can reduce paper waste and simplify post-processes in a case where flexible packaging or the like is manufactured.

### Solution to Problem

The problems to be solved by the present invention are as described above, and a means of solving the problems are described in the independent claims. Preferred embodiments are subject-matters of the dependent claims.

Provided according to a first aspect of the present application is a data processing method according to claim 1.

According to a preferred second aspect of the present invention, the following processes are performed by the data processing method according to the above-described aspect. That is, in the b), the pixel values are each assigned to a corresponding one of the recording layout coordinate sets so as to cause the first basic pattern image and the second basic pattern image to be arranged without a gap in the main scanning direction.

According to a comparative aspect not claimed, the data processing method according to the above-described aspects includes the following a-1) before the b). In this a-1), a first offset value indicative of a distance by which the first basic pattern image is shifted in the main scanning direction relative to an origin of the recording layout coordinate sets and a second offset value indicative of a distance by which the second basic pattern image is shifted in the main scanning direction relative to the origin of the recording layout coordinate sets are stored. Further, in the b), a coordinate value in the main scanning direction of the first basic pattern image to be assigned to a corresponding one of the recording layout coordinate sets is determined by subtracting the first offset value from a coordinate value in the main scanning direction of the recording layout coordinate set, and a coordinate value in the main scanning direction of the second basic pattern image to be assigned to a corresponding one of the recording layout coordinate sets is determined by subtracting the second offset value from a coordinate value in the main scanning direction of the recording layout coordinate set.

According to a comparative aspect not claimed, the following processes are performed by the data processing method according to the above-described aspects. That is, in the b), a coordinate value in the sub-scanning direction of the first basic pattern image to be assigned to a corresponding one of the recording layout coordinate sets is determined to be a remainder value obtained by dividing a coordinate value in the sub-scanning direction of the recording layout coordinate set by a length in the sub-scanning direction of the first basic pattern image, and a coordinate value in the sub-scanning direction of the second basic pattern image to be assigned to a corresponding one of the recording layout coordinate sets is determined to be a remainder value obtained by dividing a coordinate value in the sub-scanning direction of the recording layout coordinate set by a length in the sub-scanning direction of the second basic pattern image.

Provided according to a third aspect of the present application is a data recording method including a step of recording an image on the base material on the basis of the pixel values each calculated for a corresponding one of the recording layout coordinate sets by the data processing method according to the above-described aspects of the invention.

According to a fourth aspect of the present application, an image is recorded, by the data recording method according to the above-described aspects, on the base material in a one-pass manner on the basis of the pixel values each calculated for a corresponding one of the recording layout coordinate sets.

Provided according to an fifth aspect of the present application is a flexible packaging manufacturing method including manufacturing flexible packaging by dividing the base material having an image recorded by the data recording method according to the above-described aspects of the invention along a boundary between the first basic pattern image and the second basic pattern image and then cutting out the first basic pattern image or the second basic pattern image one by one.

Provided according to a sixth aspect of the present application is an image recording apparatus according to claim 6.

### Advantageous Effects of Invention

According to the first to ninth aspects of the present application, it is possible to reduce paper waste and simplify post-processes in a case where flexible packaging or the like is manufactured.

In particular, according to the first and ninth aspects of the present application, it is possible to continuously and repeatedly record (print), in the sub scanning direction, the first basic pattern image and the second basic pattern image laid out side by side in the main scanning direction on the long strip-shaped base material. This in turn makes it possible to reduce paper waste. Furthermore, it is possible to simplify post-processes such as cutting in a case where flexible packaging or the like is manufactured through the post-processes on the long strip-shaped base material.

In particular, according to the second aspect of the present application, it is possible to further reduce paper waste. In particular, in a case where flexible packaging or the like is manufactured through the post-processes on the long strip-shaped base material, it is possible to reduce work of dividing the base material along the longitudinal direction.

In particular, according to the third aspect of the present application, it is possible to appropriately determine, by simple calculation, one coordinate value in the main scanning direction of the first basic pattern image or second basic pattern image to be assigned to one coordinate value in the main scanning direction of the recording layout coordinate sets.

In particular, according to the fourth aspect of the present application, it is possible to appropriately determine, by simple calculation, the coordinate value in the sub-scanning direction of the first basic pattern image and the coordinate value in the sub-scanning direction of the second basic pattern image to be assigned to one coordinate value in the sub-scanning direction of the recording layout coordinate sets.

In particular, according to the fifth aspect of the present application, it is possible to appropriately determine, by simple calculation, the coordinate value in the main scanning direction of the first basic pattern image or second basic pattern image to be assigned to one coordinate value in the main scanning direction of the recording layout coordinate sets. Further, since the coordinate value in the main scanning direction of the first basic pattern image or second basic pattern image to be assigned to each coordinate value in the main scanning direction of the recording layout coordinate sets is determined through a single logical sum operation, it is then only necessary to repeat the operation of determining the coordinate value in the sub-scanning direction of the first basic pattern image and the second basic pattern image to be assigned to each coordinate value in the sub-scanning direction of the recording layout coordinate sets.

In particular, according to the sixth aspect of the present application, it is possible to continuously output a plurality of the first basic pattern images and second basic pattern images. Further, since it is possible to reduce paper waste, it is possible to increase manufacturing efficiency as a whole.

In particular, according to the seventh aspect of the present application, it is possible to perform recording at high speed and with high efficiency particularly in a case of a large volume of recording (printing). Further, since it is possible to reduce paper waste, it is possible to significantly increase yields when the large volume of recording is used for manufacturing products or the like.

In particular, according to the eighth aspect of the present application, since each of the first basic pattern image and the second basic pattern image is continuously and repeatedly recorded in the sub-scanning direction without a gap, the post-processes such as cutting can be performed in a regularly manner, making it possible to make the structure simple. This in turn makes it possible to reduce manufacturing cost of the flexible packaging.

### Brief Description of Drawings

FIG. 1 is a diagram showing a schematic structure of an image recording apparatus that implements a data processing method and data recording method according to a first embodiment.
FIG. 2 is a bottom view of a recording head.
FIG. 3 is a diagram conceptually showing a structure of a control system of a data processing device.
FIG. 4 is a flowchart showing a flow of data processing of generating recording data.
FIG. 5 is a diagram showing a plurality of types of basic pattern images and coordinate systems each set for a corresponding one of the basic pattern images.
FIG. 6 is a diagram showing a ganging image obtained by outputting ganging image data as recording data to a recording medium, and a coordinate system set for the ganging image.
FIG. 7 is a diagram conceptually showing a structure of a control system of a ganging part according to the first embodiment.
FIG. 8 is a flowchart showing a part of a flow of ganging processing according to the first embodiment.
FIG. 9 is a flowchart showing a flow of processes to be performed after the flow shown in FIG. 8 in the ganging processing.
FIG. 10 is a diagram for conceptually describing how a basic pattern coordinate set to be referenced for one recording layout coordinate set is determined in the ganging processing.
FIG 11 is a process chart showing a method for manufacturing flexible packaging.
FIG. 12 is a diagram conceptually showing a structure of a control system of a ganging part according to a second embodiment.
FIG. 13 is a flowchart showing a series of processes to be performed in place of the flow shown in FIG. 8 in a data processing method according to the second embodiment.
FIG. 14 is a diagram schematically showing how a logical sum of a first strip-shaped image and a second strip-shaped image is taken according to the second embodiment.

### Description of Embodiments

Hereinafter, preferred embodiments of the present invention will be described with reference to the drawings. Note that, in the following, a direction in which a recording medium moves relative to a recording head will be referred to as a "sub-scanning direction". Further, a direction along a surface of the recording medium and orthogonal to the sub-scanning direction is referred to as a "main scanning direction".

### <1. First embodiment>

### <1-1. Overall structure of printing apparatus>

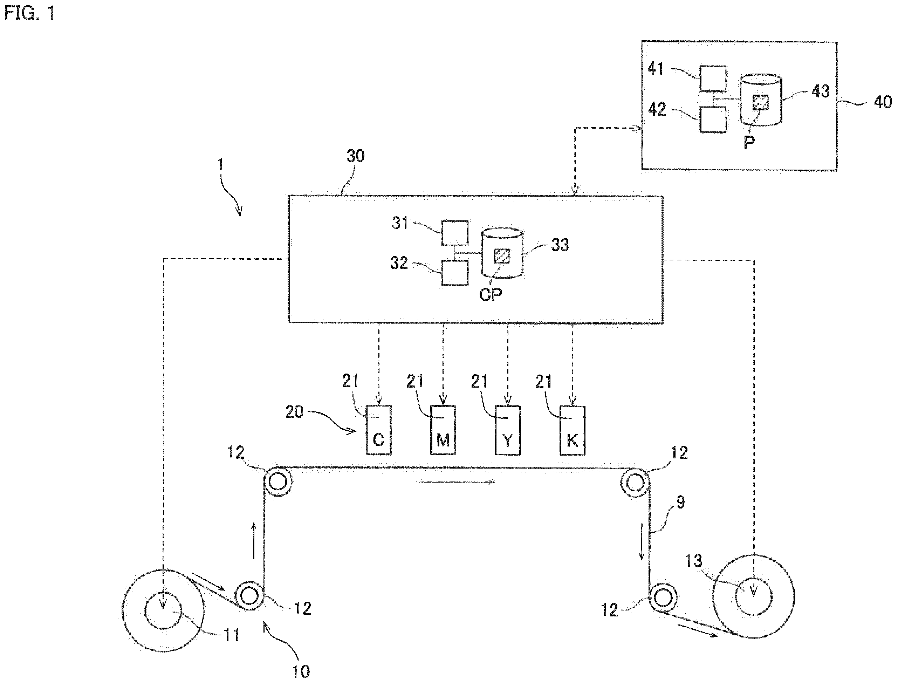

A printing apparatus (image recording apparatus) 1 that implements a data processing method and data recording method according to a first embodiment of the present invention will be described below with reference to FIG. 1. FIG. 1 shows an overall structure of the printing apparatus 1 corresponding to the image recording apparatus according to the present embodiment. The printing apparatus 1 prints (records) an image on a surface of a film 9 that is a long strip-shaped (web), colorless and transparent base material (recording medium) while conveying the film 9 along a longitudinal direction of the film 9. More specifically, the printing apparatus 1 generates data to be printed on the film 9 (hereinafter, referred to as "recording data") and prints, on the film 9, an image based on the recording data.

The printing apparatus 1 according to the present embodiment is a one-pass inkjet printing apparatus configured to eject ink from a plurality of recording heads 21 toward the surface of the film 9 on the basis of the above-described recording data while conveying the film 9 to print a multicolor image on a recording surface of the film 9. As shown in FIG. 1, the printing apparatus 1 includes a conveyance mechanism 10, an image recording part 20, a controller 30, and a data processing device 40.

The conveyance mechanism 10 is a mechanism that moves the film 9 relative to the plurality of recording heads 21 along the sub-scanning direction that coincides with the longitudinal direction of the film 9. The conveyance mechanism 10 according to the present embodiment includes an unwinding part 11, a plurality of conveyance rollers 12, and a winding part 13. The film 9 is unwound from the unwinding part 11 and conveyed along a conveyance path formed by the plurality of conveyance rollers 12. Each of the conveyance rollers 12 rotates about a horizontal axis to guide the film 9 toward a downstream side of the conveyance path. Further, the film 9 after being conveyed is collected by the winding part 13.

As shown in FIG. 1, the film 9 moves, below the image recording part 20, approximately horizontally along an arrangement direction of the plurality of recording heads 21 that eject different colors of ink. Further, the film 9 is stretched over the plurality of conveyance rollers 12 with tension applied to the film 9. This suppresses the occurrence of slack or wrinkles of the film 9 during conveyance.

The image recording part 20 is a processing part that causes droplets of ink (hereinafter, referred to as "ink droplets") to be ejected to the film 9 conveyed by the conveyance mechanism 10. The image recording part 20 according to the present embodiment include four recording heads 21 arranged in the sub-scanning direction. These recording heads 21 each eject, to the recording surface of the film 9, ink droplets of a corresponding one of cyan (C), magenda (M), yellow (Y), and black (K) colors that are color components of a multicolor image. The recording heads 21 are stationary arranged in a housing (not shown) of the apparatus.

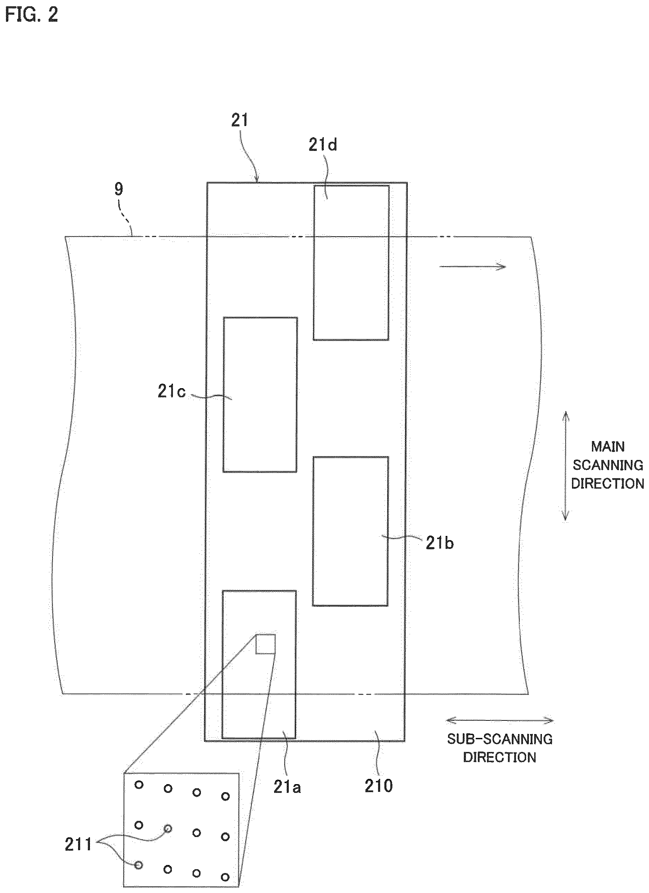

FIG. 2 is a bottom view of the recording heads 21. As shown in FIG. 2, an ejection surface 210 from which ink droplets are ejected is provided on a bottom of each of the recording heads 21. The ejection surface 210 covers a whole area of the film 9 in the main scanning direction. Further, as shown in an enlarged manner in FIG. 2, the ejection surface 210 has a plurality of nozzles 211 arranged at regular intervals along the main scanning direction. The plurality of nozzles 211 are arranged such that their positions are shifted from each other in the main scanning direction, and each nozzle 211 is assigned to an area having one pixel width on the film 9. In printing, ink droplets are ejected from the plurality of nozzles 211 of each of the recording heads 21 toward the recording surface of the film 9. As a result, each of the four recording heads 21 records a multitone monochrome image on the recording surface of the film 9 in a one-pass manner. Then, the four monochrome images are superimposed on each other to form a multicolor image on the recording surface of the film 9.

Note that each of the recording heads 21 according to the present embodiment includes a plurality of small heads 21a, 21b, 21c, 21d arranged in the main scanning direction, as shown in FIG. 2. According to the present embodiment, each of the heads 21 includes the four small heads 21a, 21b, 21c, 21d, but the number of small heads may be five or more, or alternatively, one to three. Further, as shown in FIG. 2, the plurality of small heads according to the present embodiment are shifted from each other in the sub-scanning direction so as to be arranged in a staggered manner, but the present invention is not limited to such an arrangement, and the plurality of small heads may be arranged linearly in the main scanning direction.

Note that a drying part that dries ink ejected onto the recording surface of the film 9 may be further provided downstream of the image recording part 20 in a conveyance direction. The drying part blows heated gas toward the film 9 to evaporate a solvent in ink attached to the film 9 to dry the ink. Note that the ink may be fused to the recording medium by a method different from the above-described method, such as application of ultraviolet rays to ultraviolet curable ink (UV ink).

Return to FIG. 1. The controller 30 is a means of controlling operation of each of the components of the printing apparatus 1. The controller 30 according to the present embodiment is configured by a computer including a processor 31 such as a CPU, a memory 32 such as a RAM, and a storage part 33 such as a hard disk drive. As represented by a dashed line in FIG. 1, the controller 30 is electrically connected to the above-described conveyance mechanism 10, the four recording heads 21, and the data processing device 40 to be described later. The controller 30 temporarily loads a computer program CP stored in the storage part 33 into the memory 32, and causes the processor 31 to perform arithmetic processing in accordance with the computer program CP to control the operation of each of the above-described components. Accordingly, the cooperation of the above-described hardware and software causes print processing (image recording processing) in the printing apparatus 1 to be carried on.

The data processing device 40 shown in FIG. 1 is a means of generating recording data to be printed and digitally outputting the generated recording data to the controller 30. The data processing device 40 according to the present embodiment is configured by a computer including a processor 41 such as a CPU, a memory 42 such as a RAM, and a storage part 43 such as a hard disk drive. As represented by a dashed line in FIG. 1, the data processing device 40 is electrically connected to the controller 30. The data processing device 40 temporarily loads a computer program P stored in the storage part 43 into the memory 42, and causes the processor 41 to perform arithmetic processing in accordance with the computer program P to generate the recording data. That is, the cooperation of the above-described hardware and software causes data processing (recording data generation processing) in the data processing device 40 to be carried on.

### <1-2. Outline of data processing>

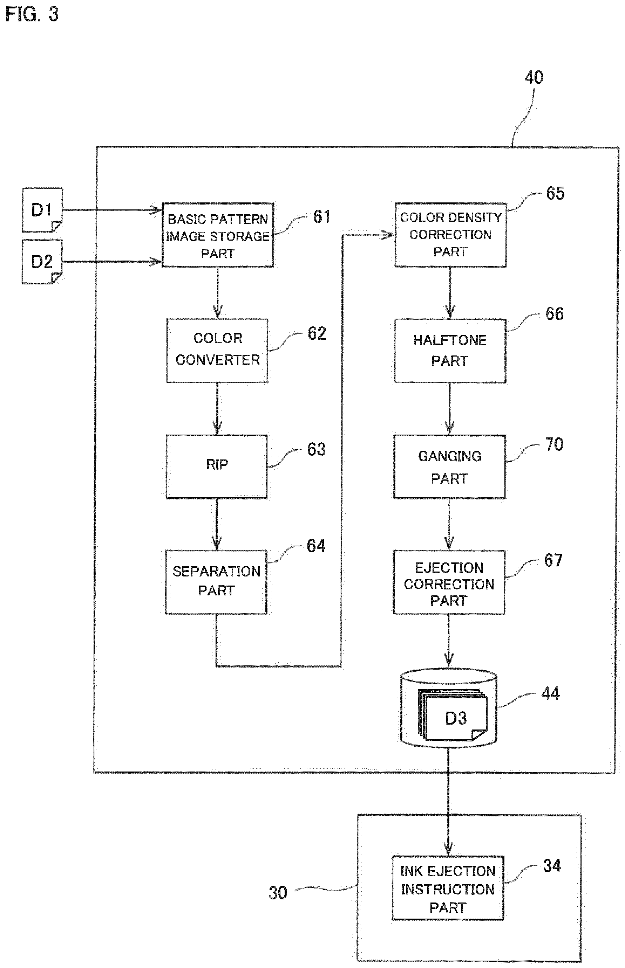

The data processing device 40 according to the present embodiment generates recording data having a plurality of types of basic pattern images D1, D2 (to be described later) repeatedly imposed. The data processing device 40 includes a buffer 44 (see FIG. 3) that stores the recording data thus generated. During print processing, while the film 9 is being conveyed by the conveyance mechanism 10, the controller 30 reads the recording data stored in the buffer 44 (ganging image data D3 to be described later) and controls each of the recording heads 21 to eject ink on the basis of the recording data. As a result, an image corresponding to the recording data is printed on the recording surface of the film 9.

The data processing device 40 makes various corrections to each of the plurality of types of basic pattern images D1, D2 that have been input (sent). Further, the data processing device 40 generates the ganging image data D3 by ganging (imposing) the plurality of types of basic pattern images D1, D2 thus corrected. This ganging image data D3 corresponds to the above-described recording data. FIG. 3 is a block diagram conceptually showing functions related to the data processing in the data processing device 40. As shown in FIG. 3, the data processing device 40 includes a basic pattern image storage part 61, a color converter 62, a raster image processor (RIP) 63, a separation part 64, a color density correction part 65, a halftone part 66, a ganging part 70, and an ejection correction part 67. The functions of these components are implemented by the cooperation of the above-described software and hardware installed in the data processing device 40.

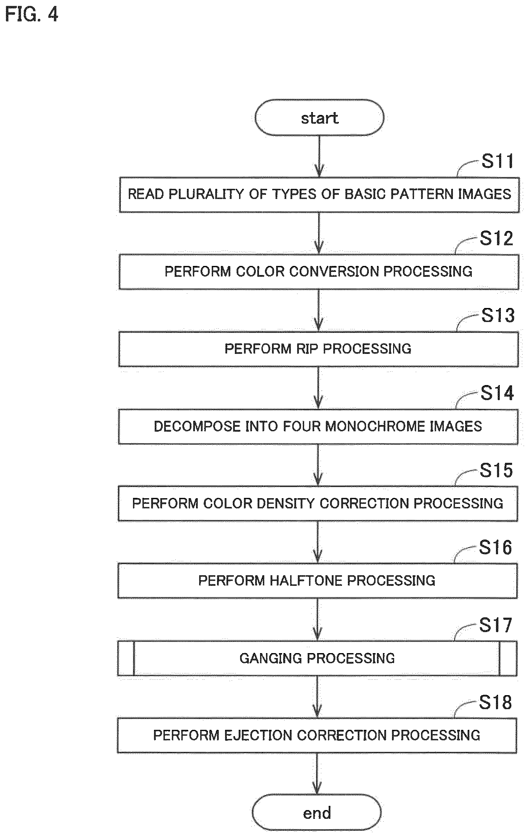

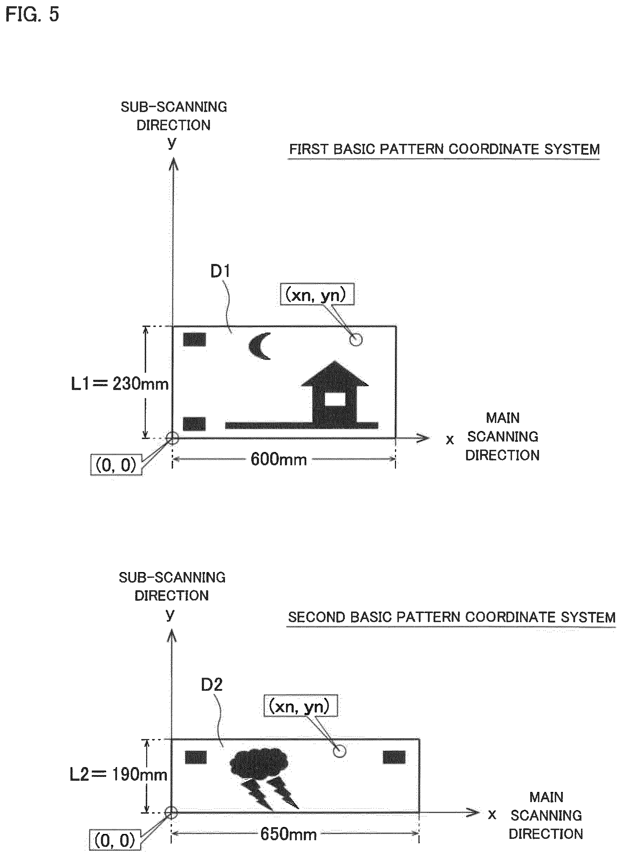

FIG. 4 is a flow chart showing a flow of data processing to be performed by each of the above-described components of the data processing device 40. As shown in FIG. 4, first, the plurality of types (two in the present embodiment) of basic pattern images D1, D2 are read from the basic pattern image storage part 61 (step S11). FIG. 5 shows the two types of basic pattern images D1, D2 according to the present embodiment. As shown in FIG. 5, the two types of basic pattern images D1, D2 are both rectangular images. The two types of basic pattern images D1, D2 differ from each other in at least length (vertical width) in the sub-scanning direction (L1 ≠ L2). Further, according to the present embodiment, the two types of basic pattern images D1, D2 also differ from each other in length (lateral width) in the main scanning direction. Needless to say, the two types of basic pattern images D1, D2 may have the same length (lateral width) in the main scanning direction.

Return to FIG. 3 and FIG. 4. After step S11, the color converter 62 performs color conversion processing of making fine adjustments to colors of each of the basic pattern images D1, D2 thus read in accordance with characteristics of the printing apparatus 1, characteristics of ink, characteristics of the film (base material) 9, and the like (step S12). Subsequently, the RIP 63 performs so-called RIP processing of converting each of the basic pattern images D1, D2 described in the page description language (PDL) into a raster image (step S13). Next, the separation part 64 decomposes each of the basic pattern images D1, D2 after being subjected to the RIP processing into four pieces of monochrome image data of C, M, Y, K (step S14).

When the pieces of monochrome image data are generated in step S14, the color density correction part 65 performs color density correction processing on each of the pieces of monochrome image data (step S15). Herein, the color density correction processing corresponds to processing to be performed for preventing color irregularities from appearing due to operating characteristics of or individual differences among the nozzles 211. The color density correction part 65 refers to a correction value that is preset for each of the nozzles 211 on the basis of the operating characteristics of or individual differences among the nozzles 211 to increase or decrease a gradation value (pixel value) of each pixel in each piece of monochrome image data for each of the nozzles 211.

After the color density correction processing is performed on each piece of monochrome image data, the halftone part 66 performs halftone processing of converting the gradation value (pixel value) of each pixel into a corresponding type of ink droplet (step S16). Specifically, the halftone part 66 converts the gradation value of each pixel into data representing a size of ink droplet to be ejected (for example, a quaternary value or 2-bit data representing a small ink droplet, a medium ink droplet, a large ink droplet, or no ink droplet). In other words, the halftone part 66 converts data representing the gradation value of each pixel of each piece of monochrome image data into information on halftone dots.

Next, the ganging part 70 generates the ganging image data D3 having the first basic pattern image D1 and the second basic pattern image D2 after being subjected to the halftone processing, that is, the two types of images to be printed, laid out (imposed) so as to be printed, at the same time, continuously and repeatedly (step S17). The ganging part 70 and the ganging image data D3 will be described in detail later.

Subsequently, the ejection correction part 67 makes, for the ganging image data D3, an ejection correction of setting, for each of the nozzles 211, the correction value for use in fine adjustments to timing at which an ejection instruction is given to each of the nozzles 211 and the like with consideration given to an arrangement position of each of the nozzles 211 and the like (step S18).

Then, as shown in FIG. 3, the ganging image data D3 after being subjected to the ejection correction is stored in the buffer 44 and is kept in a standby state until being read by the controller 30.

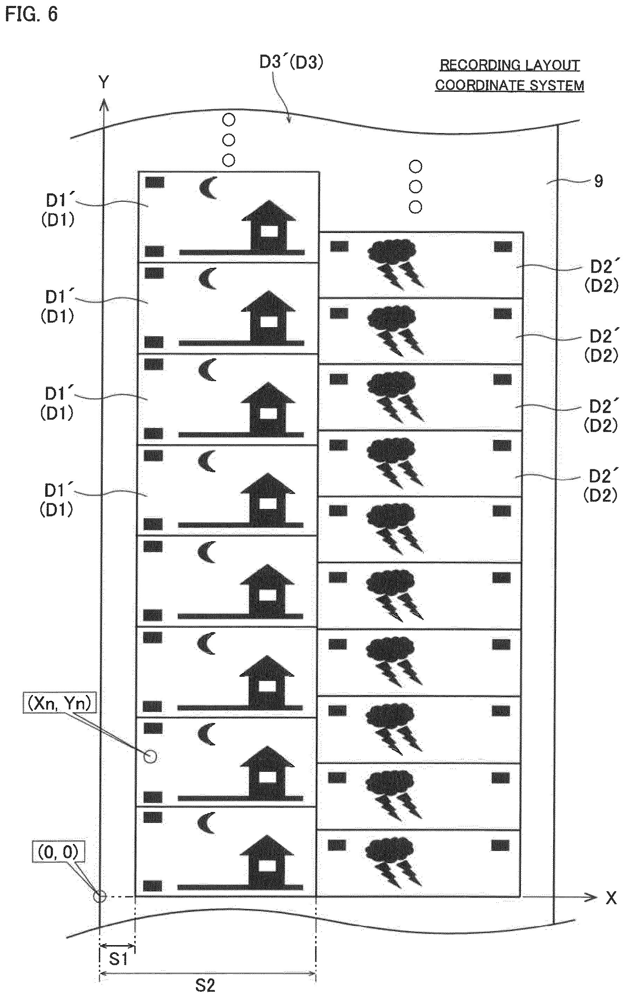

As shown in FIG. 3, the controller 30 includes an ink ejection instruction part 34. The ink ejection instruction part 34 (see FIG. 3) reads the ganging image data D3 of each color (C, M, Y, K) after being subjected to the ejection correction, and causes each of the recording heads 21 to eject ink from the plurality of nozzles 211 on the basis of the ganging image data D3. This causes ink of each of the C, M, Y, and K colors to be sequentially ejected onto the recording surface of the film 9 that is being conveyed. As a result, the ganging image D3 having the two types of basic pattern images D1, D2 imposed is printed on the recording surface of the film 9. In the following, the first basic pattern image, the second basic pattern image, and the ganging image in the form of output images printed on the film 9 are denoted by "D1", "D2'", and "D3'", respectively, so as to be differentiated from the images D1, D2, D3 in the form of data. FIG. 6 shows an example of the ganging image D3' output on the film 9. As described above, according to the present embodiment, the first basic pattern image D1' and the second basic pattern image D2' are printed, at the same time, continuously and repeatedly in the sub-scanning direction.

### <1-3. Ganging processing>

Next, the ganging processing to be performed by the ganging part 70 of the data processing device 40 will be described in more detail with reference to FIGS. 5 to 10.

The ganging part 70 according to the present embodiment generates the ganging image data D3 to be printed on the film 9 (see FIG. 6). The image width (lateral width) of the ganging image data D3 in the main scanning direction corresponds to the width of the film 9 in the main scanning direction. Further, the image length of the ganging image data D3 in the sub-scanning direction is permanent. That is, the ganging image D3' extends in the sub-scanning direction without being divided into print units such as pages. However, the image length of the ganging image data D3 in the sub-scanning direction may correspond to the length in the longitudinal direction of the film 9 loaded on the unwinding part 11.

As shown in FIG. 6, in the ganging image data D3, the first basic pattern image D1 and the second basic pattern image D2 are laid out side by side in the main scanning direction and are each continuously and repeatedly laid out in the sub-scanning direction. Note that a margin may be provided between the first basic pattern image D1 and the second basic pattern image D2 laid out side by side in the main scanning direction.

The ganging image data D3 is output to the recording surface of the film 9 by the printing apparatus 1 (ink ejection instruction part 34), so that a print (film 9) can be obtained on which the first basic pattern image D1' and the second basic pattern image D2' are arranged side by side in the main scanning direction and are each arranged continuously and repeatedly in the sub-scanning direction. As will be described later, according to the present embodiment, the film 9 serving as a print is used in manufacture of a large volume of flexible packaging.

Next, the ganging processing will be described more specifically. In the following description, a position of each pixel in an image area of the ganging image data D3 is represented by a combination (Xn, Yn) of a coordinate value in the main scanning direction (hereinafter, may be referred to as "X-axis direction") and a coordinate value in the sub-scanning direction (hereinafter, may be referred to as "Y-axis direction"). Further, a coordinate system including all recording layout coordinate sets represented by the combination (Xn, Yn) of the coordinate value in the main scanning direction and the coordinate value in the sub scanning direction is referred to as a "recording layout coordinate system" (see FIG. 6).

On the other hand, a coordinate set corresponding to a position of each pixel in an image area of the first basic pattern image D1 represented by a combination of a coordinate value (x-coordinate value) in the main scanning direction (x-axis direction) and a coordinate value (y-coordinate value) in the sub-scanning direction (y-axis direction) is referred to as a first basic pattern coordinate set, and a coordinate system including all the first basic pattern coordinate sets is referred to as a "first basic pattern coordinate system" (see FIG. 5). A coordinate set corresponding to a position of each pixel in an image area of the second basic pattern image D2 represented by a combination of a coordinate value (x-coordinate value) in the main scanning direction (x-axis direction) and a coordinate value (y-coordinate value) in the sub-scanning direction (y-axis direction) is referred to as a second basic pattern coordinate set, and a coordinate system including all the second basic pattern coordinate sets is referred to as a "second basic pattern coordinate system". All the basic pattern coordinate sets (xn, yn) in a range of the first basic pattern coordinate system and the second basic pattern coordinate system each have a set pixel value (an ink droplet size for halftone dots according to the present embodiment).

First, a brief description will be given of a method for generating the ganging image data D3 according to the present embodiment, by which, for each of the recording layout coordinate sets (Xn, Yn) of the recording layout coordinate system, one basic pattern coordinate set (xn, yn) to be referenced that is in a range of one of the first basic pattern coordinate system or the second basic pattern coordinate system is determined, then the pixel value of the one basic pattern coordinate set (xn, yn) thus determined is laid out (arranged) at a position of one corresponding coordinate set (recording layout coordinate set) of the recording layout coordinate system, and this processing is performed on all the recording layout coordinate sets. As a result, the pixels of the first basic pattern image D1 and the second basic pattern image D2 are each arranged at a corresponding position of the recording layout coordinate system, thereby generating the ganging image data D3 as shown in FIG. 6.

Note that, for all the recording layout coordinate sets (Xn, Yn) in a range of the recording layout coordinate system, one basic pattern coordinate set (xn, yn) to be referenced that is in a range of one of the first basic pattern coordinate system or the second basic pattern coordinate system is not necessarily determined. In other words, the plurality of recording layout coordinate sets (Xn, Yn) include a coordinate set that is determined to be not referenced (not assigned) by any of the basic pattern coordinate sets of the first basic pattern coordinate system and the second basic pattern coordinate system. Of all the recording layout coordinate sets (Xn, Yn), some recording layout coordinate sets to which no basic pattern coordinate set is assigned become a margin.

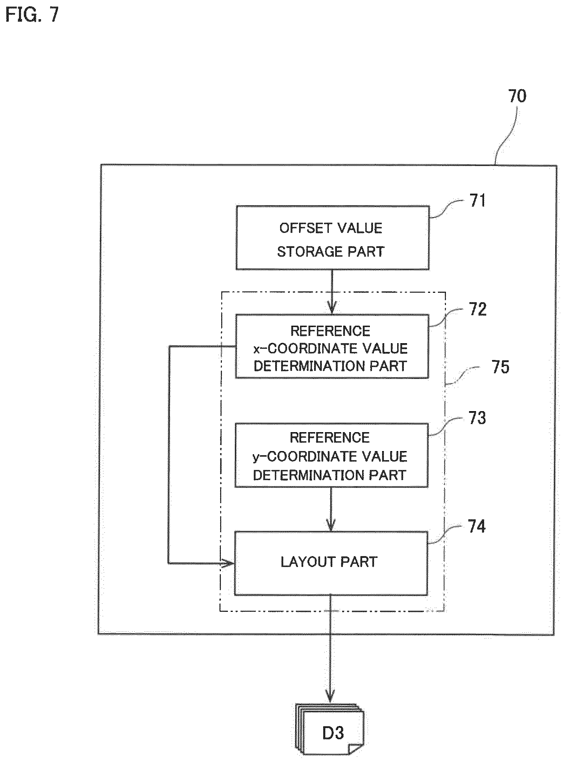

Hereinafter, the ganging processing to be performed by the ganging part 70 will be described more specifically. FIG. 7 is a block diagram conceptually showing the functions of the ganging part 70. As shown in FIG. 7, the ganging part 70 according to the present embodiment includes an offset value storage part 71, a reference x-coordinate value determination part 72, a reference y-coordinate value determination part 73, and a layout part 74. Note that the reference x-coordinate value determination part 72, the reference y-coordinate value determination part 73, and the layout part 74 are combined to form a calculation part 75 according to the present embodiment.

The offset value storage part 71 stores a first offset value S1 indicative of a distance by which the first basic pattern image D1 is shifted in the X-axis direction relative to an origin (0, 0) of the recording layout coordinate sets in order to arrange the first basic pattern image D1 and the second basic pattern image D2 side by side in the X-axis direction. Further, the offset value storage part 71 stores a second offset value S2 indicative of a distance by which the second basic pattern image D2 is shifted in the X-axis direction relative to the origin (0, 0) of the recording layout coordinate sets (see FIG. 6). Note that the second offset value S2 is greater than the first offset value S1.

Herein, as shown in FIG. 6, the origin (0, 0) of the recording layout coordinate sets corresponds to a position of one end in the main scanning direction of the film 9 at a start position of printing on the film 9 based on the ganging image data D3. In other words, the origin (0, 0) of the recording layout coordinate sets corresponds to a position of a corner of the ganging image data D3 (D3'). The first offset value S1 and the second offset value S2 may be automatically set in accordance with the image widths (lateral widths) of the basic pattern images D1, D2, or alternatively, may be manually set by a user.

The reference x-coordinate value determination part 72 is configured to determine one x-coordinate value of the first basic pattern image D1 or the second basic pattern image D2 to be assigned to one X-coordinate value of the recording layout coordinate sets. The reference x-coordinate value determination part 72 determines the x-coordinate value of the first basic pattern image D1 to be assigned to the one X-coordinate value of the recording layout coordinate sets by subtracting the first offset value S1 from the one X-coordinate value. Further, the reference x-coordinate value determination part 72 determines the x-coordinate value of the second basic pattern image D2 to be assigned to the one X-coordinate value of the recording layout coordinate sets by subtracting the second offset value S2 from the one X-coordinate value.

The reference y-coordinate value determination part 73 is configured to determine a y-coordinate value of the first basic pattern image D1 and a y-coordinate value of the second basic pattern image D2 to be assigned to one Y-coordinate value of the recording layout coordinate sets. The reference y-coordinate value determination part 73 determines the y-coordinate value of the first basic pattern image D1 and the y-coordinate value of the second basic pattern image D2 to be assigned to the one Y-coordinate value of the recording layout coordinate sets by calculating remainders obtained by dividing the one Y-coordinate value by the image width (vertical width) of the first basic pattern image D1 in the y-axis direction and the image width (vertical width) of the second basic pattern image D2 in the y-axis direction.

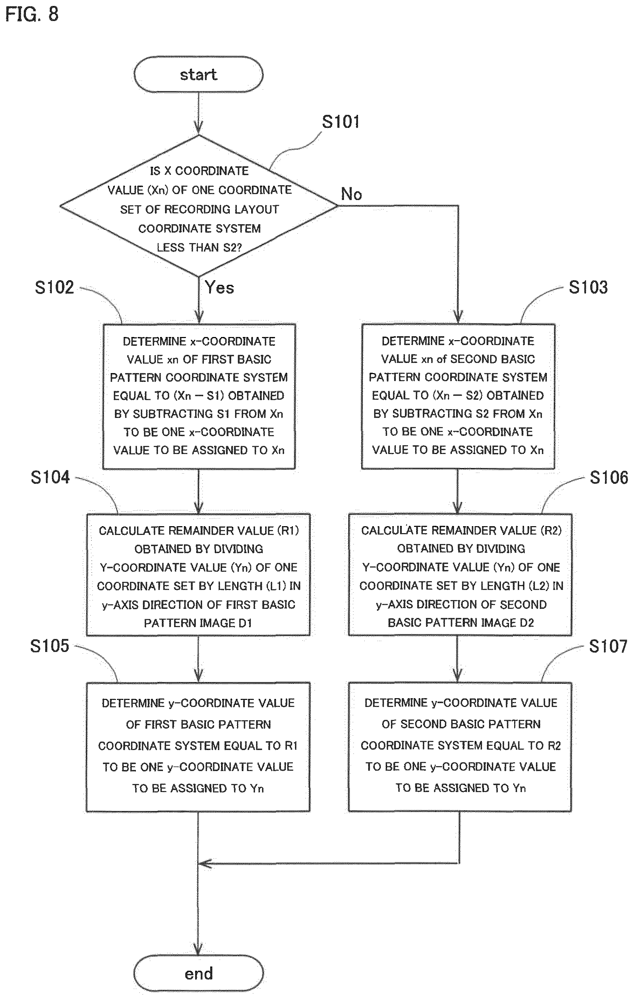

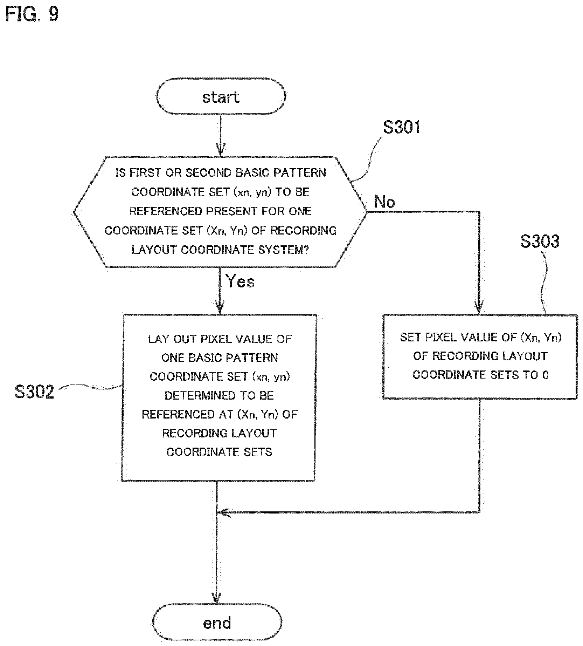

Hereinafter, the flow of the ganging processing to be performed by the ganging part 70 will be described with reference to the flowcharts shown in FIGS. 8 and 9.

First, as shown in FIGS. 7 and 8, the reference x-coordinate value determination part 72 of the ganging part 70 reads the second offset value S2 from the offset value storage part 71. Then, the reference x-coordinate value determination part 72 determines whether one X-coordinate value Xn of the recording layout coordinate system is less than the second offset value S2 (step S101).

When a result of the determination in step S101 shows that the above-described one X-coordinate value Xn of the recording layout coordinate system is less than the second offset value S2 (Yes in step S101), an area where this X-coordinate value Xn is arranged is located within the first basic pattern image D1' relative to a boundary between the first basic pattern image D1' and the second basic pattern image D2'. In this case, the reference x-coordinate value determination part 72 determines the x-coordinate value xn of the first basic pattern coordinate system equal to (Xn - S1) obtained by subtracting the first offset value S1 from the above-described X-coordinate value Xn to be one x-coordinate value to be assigned to the above-described X-coordinate value Xn (step S102).

On the other hand, when a result of the determination in step S101 shows that the above-described one X-coordinate value Xn of the recording layout coordinate system is equal to or greater than the second offset value S2 (No in step S101), an area where this X-coordinate value Xn is arranged is located within the second basic pattern image D2' relative to the boundary between the first basic pattern image D1' and the second basic pattern image D2'. In this case, the reference x-coordinate value determination part 72 determines the x-coordinate value xn of the second basic pattern coordinate system equal to (Xn - S2) obtained by subtracting the second offset value S2 from the above-described X-coordinate value Xn to be one x-coordinate value to be assigned to the above-described X-coordinate value Xn (step S103).

Through steps S101 to S103 performed by the reference x-coordinate value determination part 72, the x-coordinate values xn of the first or second basic pattern coordinate sets are each assigned to a corresponding one of the X-coordinate values Xn of the recording layout coordinate sets on a one-to-one basis. Note that, as described above, some of the X-coordinate values Xn of the recording layout coordinate sets are assigned no x-coordinate value of the basic pattern coordinate sets. In the example shown in FIG. 6, for example, no x-coordinate value of the basic pattern coordinate sets is assigned to X-coordinate values of the recording layout coordinate system located in a range of from 0 to less than S1.

In parallel with or before or after the flow of steps S102 and 103, the reference y-coordinate value determination part 73 of the ganging part 70 performs the flow of steps S104 to S107 shown in FIG. 8.

Specifically, the reference y-coordinate value determination part 73 calculates a remainder value R1 obtained by dividing the Y-coordinate value Yn of the one layout coordinate (Xn, Yn) determined to be "Yes" in step S101 by a length L1 (230 mm according to the present embodiment) of the first basic pattern image D1 in the y-axis direction (step S104).

Subsequently, the reference y-coordinate value determination part 73 determines the y-coordinate value yn of the first basic pattern coordinate system equal to the above-described remainder value R1 to be one y-coordinate value to be assigned to the above-described Y-coordinate value Yn (step S105).

Further, the reference y-coordinate value determination part 73 calculates a remainder value R2 obtained by dividing the Y-coordinate value Yn of the one layout coordinate (Xn, Yn) determined to be "No" in step S101 by a length L2 (190 mm according to the present embodiment) of the second basic pattern image D2 in the y-axis direction (step S106).

Subsequently, the reference y-coordinate value determination part 73 determines the y-coordinate value yn of the second basic pattern coordinate system equal to the above-described remainder value R2 to be one y-coordinate value to be assigned to the above-described Y-coordinate value Yn (step S107).

Steps S104 to S107 shown in FIG. 8 are performed on Y-coordinate values of all the recording layout coordinate sets that are equal to or greater than 0. This causes the y-coordinate values of the first and second basic pattern coordinate sets to be assigned to a corresponding one of the Y-coordinate values of the recording layout coordinate sets on a one-to-two basis.

After the flow of FIG. 8, the layout part 74 of the ganging part 70 performs the flow shown in FIG. 9.

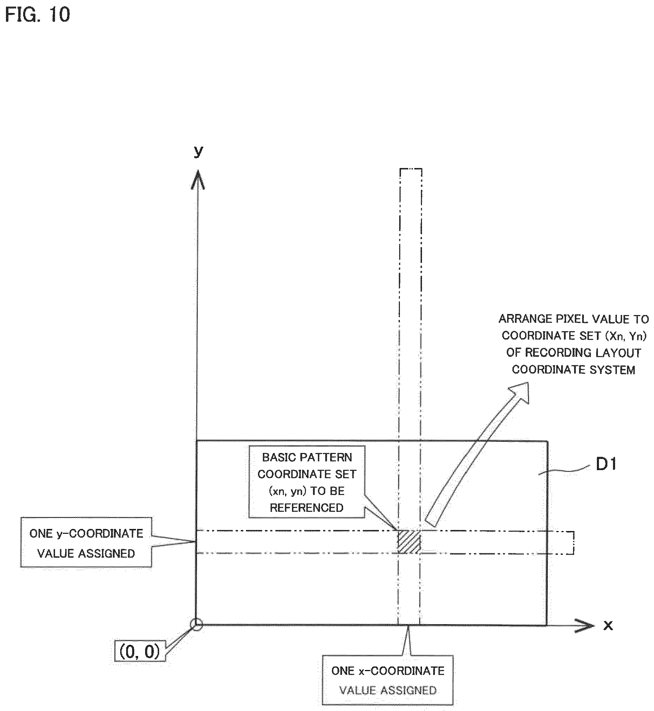

Specifically, the layout part 74 first determines whether a first or second basic pattern coordinate set (xn, yn) to be referenced is present for one recording layout coordinate set (Xn, Yn) in a range of the recording layout coordinate system (step S301). More specifically, on the basis of both the assignments determined by the reference x-coordinate value determination part 72 and the assignments determined by the reference y-coordinate value determination part 73, the basic pattern coordinate sets (xn, yn) to be referenced are uniquely determined. Note that FIG. 10 conceptually shows how the basic pattern coordinate set (xn, yn) to be referenced for the above-described one recording layout coordinate set (Xn, Yn) is determined. When the basic pattern coordinate set (xn, yn) to be referenced is determined by the above-described method (Yes in step S301), a pixel value of the one basic pattern coordinate set (xn, yn) determined to be referenced (see a hatching pattern shown in FIG. 10) is laid out at the above-described one recording layout coordinate set (Xn, Yn) (step S302).

On the other hand, the basic pattern coordinate set to be referenced for the above-described one recording layout coordinate set (Xn, Yn) is not determined, that is, is not present, the layout part 74 arranges a pixel value of 0 to the above-described one recording layout coordinate set (Xn, Yn) (step S303).

As described above, the layout part 74 arranges pixel values to all the recording layout coordinate sets (Xn, Yn) in a range of the recording layout coordinate system. Accordingly, the ganging image data D3 is generated.

### <1-4. Method for manufacturing flexible packaging>

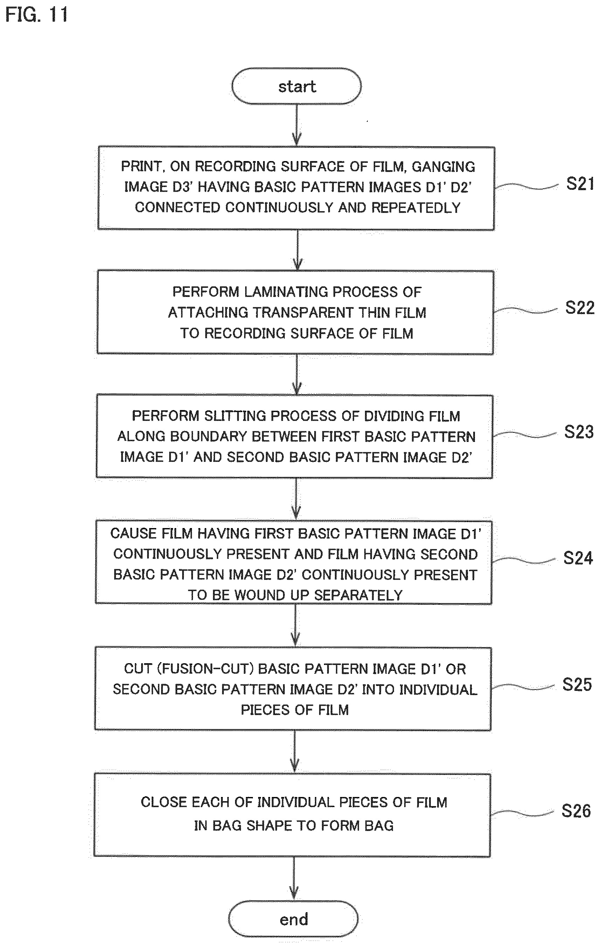

According to the present embodiment, a print obtained by outputting the ganging image data D3 (the film 9 having the ganging image D3' printed on the film 9) is used for mass-producing flexible packaging. Specifically, after obtaining the print D3' as shown in FIG. 6, processes such as laminating, slitting, fusing, and bag making are sequentially performed. FIG. 11 shows processes of manufacturing flexible packaging according to the present embodiment.

Specifically, first, the ganging image data D3 is output to the recording surface of the film 9 by the above-described image recording method. Accordingly, the film 9 having the ganging image D3' printed on the film 9 is obtained (step S21).

Subsequently, the laminating process of attaching a transparent thin film to the recording surface of the film 9 is performed (step S22).

Then, the slitting process of dividing (cutting) the film 9 as a print along the boundary between the first basic pattern image D1' and the second basic pattern image D2' in the longitudinal direction of the film 9 using a known slit blade is performed (step S23).

After the slitting process (step S23), a film having the first basic pattern images D1' and a film having the second basic pattern images D2' are each wound up by a corresponding roll narrower than the winding part 13 (step S24).

After step S24, the film is fed out from each of the narrow rolls, and the one basic pattern image D1' or the second basic pattern image D2' is cut (specifically, fusion-cut) along a boundary between leading and trailing basic pattern images into individual pieces of film (step S25).

Finally, the individual pieces of film formed in step S25 are each closed in a bag shape to form a bag (step S26).

As described above, in the data processing method according to the present embodiment, data processing of repeatedly recording the first basic pattern image D1 and the second basic pattern image D2 on the long strip-shaped film (base material) 9 is performed. This data processing method includes the following a) and b). In the a), the first basic pattern image D1 and the second basic pattern image D2 are stored in the basic pattern image storage part 61. In the b), a pixel value to be recorded for each recording layout coordinate set (see FIG. 6) indicative of a position on the film 9 is calculated (see FIG. 10). Further, in the b), a pixel value of each first basic pattern coordinate set indicative of a corresponding position on the first basic pattern image D1 (see FIG. 5) and a pixel value of each second basic pattern coordinate set indicative of a corresponding position on the second basic pattern image D2 (see FIG. 5) are each assigned to a corresponding one of the recording layout coordinate so as to cause the first basic pattern image D1 and the second basic pattern image D2 to be arranged side by side in the main scanning direction and to cause the first basic pattern image D1 and the second basic pattern image D2 to be each arranged continuously and repeatedly in the sub-scanning direction.

In addition, the present embodiment has disclosed the printing apparatus (image recording apparatus) 1 including the recording head 21, the conveyance mechanism 10, and the data processing device 40. The recording head 21 ejects ink from the plurality of nozzles 211 arranged in the main scanning direction. The conveyance mechanism 10 conveys the long strip-shaped film (base material) 9 relative to the recording head 21 in the sub-scanning direction. The data processing device 40 generates the ganging image data (recording data) D3 input to the recording head 21. The data processing device 40 includes the basic pattern image storage part (storage part) 61 and the calculation part 75. The basic pattern image storage part 61 stores the first basic pattern image D1 and the second basic pattern image D2. The calculation part 75 calculates the pixel value to be recorded for each of the recording layout coordinate sets each indicative of a corresponding position on the film 9. The calculation part 75 assigns a pixel value of each first basic pattern coordinate set indicative of a corresponding position on the first basic pattern image D1 and a pixel value of each second basic pattern coordinate set indicative of a corresponding position on the second basic pattern image D2 to a corresponding one of the recording layout coordinate sets so as to cause the first basic pattern image D1 and the second basic pattern image D2 to be arranged side by side in the main scanning direction and to cause the first basic pattern image D1 and the second basic pattern image D2 to be each arranged continuously and repeatedly in the sub-scanning direction.

Accordingly, the first basic pattern image D1 and the second basic pattern image D2 laid out side by side in the main scanning direction on the film 9 can be continuously and repeatedly recorded (printed) in the sub scanning direction. This in turn makes it possible to reduce paper waste. This further makes it possible to simplify post-processes such as cutting in a case where flexible packaging or the like is manufactured through the post-processes on the film 9 (step S25 shown in FIG. 11).

Further, in the data processing method according to the present embodiment, in the process b), the first basic pattern image D1' (D1) and the second basic pattern image D2' (D2) are arranged without a gap in the main scanning direction.

This makes it possible to further reduce paper waste. In particular, it is possible to reduce work of dividing the film 9 along the longitudinal direction (step S23 shown in FIG. 11) in a case where flexible packaging or the like is manufactured through the post-processes on the film 9.

Further, the data processing method according to the present embodiment includes the following a-1) before the b). In this a-1), the offset value storage part 71 stores the first offset value S1 and the second offset value S2. Further, in the b), a coordinate value xn in the main scanning direction of the first basic pattern image D1 to be assigned to a corresponding one of the recording layout coordinate sets is determined by subtracting the first offset value S1 from a coordinate value Xn in the main scanning direction of the recording layout coordinate set, and a coordinate value xn in the main scanning direction of the second basic pattern image D2 to be assigned to a corresponding one of the recording layout coordinate sets is determined by subtracting the second offset value S2 from a coordinate value Xn in the main scanning direction of the recording layout coordinate set.

This makes it possible to appropriately determine, by simple calculation, the one coordinate value xn in the main scanning direction of the first basic pattern image D1 or the second basic pattern image D2 to be assigned to one coordinate value Xn in the main scanning direction of the recording layout coordinate sets.

Further, in the b) of the data processing method according to the present embodiment, the remainder value R1 obtained by dividing the coordinate value Yn in the sub-scanning direction of the recording layout coordinate set by the length L1 in the sub-scanning direction of the first basic pattern image D1 is determined to be the coordinate value yn in the sub-scanning direction of the first basic pattern image D1 to be assigned to the recording layout coordinate set, and the remainder value R2 obtained by dividing the coordinate value Yn in the sub-scanning direction of the recording layout coordinate set by the length L2 in the sub-scanning direction of the second basic pattern image D2 is determined to be the coordinate value yn in the sub-scanning direction of the second basic pattern image D2 to be assigned to the recording layout coordinate set.

This makes it possible to appropriately determine, by simple calculation, two values, that is, the coordinate value yn in the sub-scanning direction of the first basic pattern image D1 and the coordinate value yn in the sub-scanning direction of the second basic pattern image D2 to be assigned to one coordinate value Yn in the sub-scanning direction of the recording layout coordinate set.

Further, the present embodiment has disclosed the printing method (data recording method) including a process of printing (recording), on the film 9, the pixel value to be recorded that is calculated for each recording layout coordinate set (Xn, Yn) (see the hatching pattern shown in FIG. 10) by the data processing method.

This makes it possible to continuously output the plurality of first basic pattern images D1 and second basic pattern images D2 (see FIG. 6). Further, since it is possible to reduce paper waste, it is possible to increase manufacturing efficiency as a whole.

Further, by the printing method disclosed in the present embodiment, a recording is performed on the film 9 in a one-pass manner on the basis of the pixel value to be recorded that is calculated for each recording layout coordinate set (Xn, Yn).

This allows, particularly when a large number of two basic pattern images D1, D2 are printed (recorded), printing to be performed at high speed and with high efficiency. Further, since it is possible to reduce paper waste, it is possible to significantly increase yields when prints are used for mass-producing products or the like.

Furthermore, the present embodiment has disclosed the flexible packaging manufacturing method by which flexible packaging is manufactured by dividing the film 9 on which printing (recording) has been performed by the above-described printing method (data recording method) along the boundary between the first basic pattern image D1' and the second basic pattern image D2' (step S23 shown in FIG. 11), and then cutting (fusion-cutting) the first basic pattern image D1' or second basic pattern image D2' one by one (step S25 shown in FIG. 11).

As described above, the first basic pattern image D1' and the second basic pattern image D2' are each continuously and repeatedly recorded without a gap in the sub-scanning direction (see FIG. 6). This makes it possible to perform the cutting (specifically, fusion-cutting) process (step S25 shown in FIG. 11) in a regular manner and allows a structure of a device for use in the cutting to be made simple. This in turn makes it possible to reduce manufacturing cost of the flexible packaging.

### <2. Second embodiment>

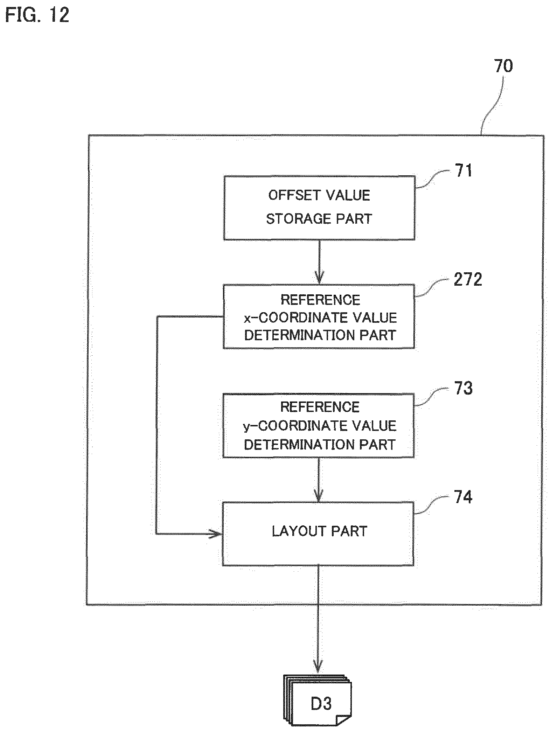

Next, a data processing method according to a second embodiment of the present invention will be described with reference to FIGS. 12 to 14. Note that the following description will be focused on differences from the first embodiment, and the same processing and parts as in the first embodiment will be assigned the same reference numerals, and the same description may be omitted.

By the data processing method according to the first embodiment, the reference x-coordinate value determination part 72 determines the x-coordinate value xn of one basic pattern coordinate system to be referenced for one X-coordinate value Xn of the recording layout coordinate system. In this regard, by the data processing method according to the second embodiment, a reference x-coordinate value determination part 272 shown in FIG. 12 rather than the reference x-coordinate value determination part 72 determines the above-described x-coordinate value xn of one basic pattern coordinate system to be referenced. FIG. 12 is a block diagram conceptually showing a structure of a ganging part 70 according to the second embodiment.

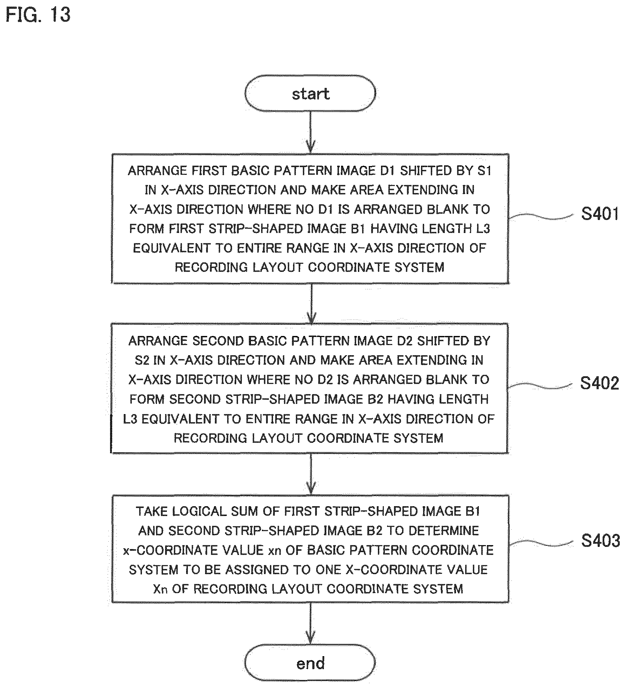

By the data processing method according to the second embodiment, in order to determine the x-coordinate value xn of one basic pattern coordinate system to be referenced for one X-coordinate value Xn of the recording layout coordinate system, processes shown in FIG. 13 are performed in place of steps S101 to S103 in the flow shown in FIG. 8. FIG. 13 shows a series of processes to be performed by the data processing method according to the second embodiment in place of steps S101 to S103 in the flow shown in FIG. 8 according to the first embodiment. The flow shown in FIG. 13 will be described below.

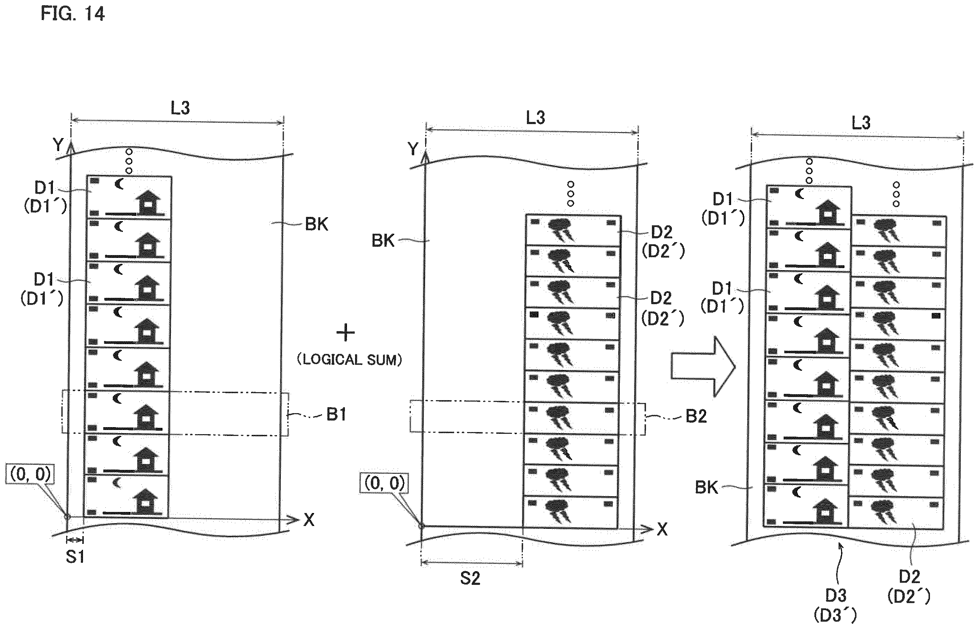

First, the reference x-coordinate value determination part 272 arranges the first basic pattern image D1 shifted by the first offset value S1 from the origin (0, 0) in the X-axis direction and makes an area extending in the X-axis direction where no first basic pattern image D1 is arranged blank (having a pixel value of 0) BK to form a first strip-shaped image B1 having a length equivalent to the entire range in the X-axis direction of the recording layout coordinate system (step S401). The first strip-shaped image B1 is generated, in order to determine the x-coordinate value xn of one basic pattern coordinate system to be referenced for one X-coordinate value Xn of the recording layout coordinate system. A length (lateral width) in the X-axis direction of the first strip-shaped image B1 corresponds to a length L3 in the X-axis direction of the ganging image data D3. FIG 14 shows an example of the first strip-shaped image B1 generated by the reference x-coordinate value determination part 272 represented by a long dashed double-short dashed line.

Subsequently, the reference x-coordinate value determination part 272 arranges the second basic pattern image D2 shifted by the second offset value S2 from the origin (0, 0) in the X-axis direction and makes an area extending in the X-axis direction where no second basic pattern image D2 is arranged blank (having a pixel value of 0) BK to form a second strip-shaped image B2 having a length equivalent to the entire range in the X-axis direction of the recording layout coordinate system (step S402). The second strip-shaped image B2 is generated, in order to determine the x-coordinate value xn of one basic pattern coordinate system to be referenced for one X-coordinate value Xn of the recording layout coordinate system. A length (lateral width) in the X-axis direction of the second strip-shaped image B2 corresponds, as in the first strip-shaped image B1, to the length L3 in the X-axis direction of the ganging image data D3. FIG. 14 shows an example of the second strip-shaped image B2 generated by the reference x-coordinate value determination part 272 represented by a long dashed double-short dashed line.

Then, the reference x-coordinate value determination part 272 takes a logical sum of the first strip-shaped image B1 and the second strip-shaped image B2 to determine an x-coordinate value xn of the first or second basic pattern coordinate system to be assigned to one coordinate value Xn of the recording layout coordinate system (step S403). In other words, the reference x-coordinate value determination part 272 performs the OR operation on the first strip-shaped image B1 and the second strip-shaped image B2 to determine, on a one-to-one basis, the x-coordinate value xn of the first or second basic pattern coordinate to be referenced for each coordinate value Xn of the recording layout coordinate sets.

According to the present embodiment, in parallel with or before or after the processes shown in FIG. 13, the same processes as in steps S104 to S107 shown in FIG. 8 are performed. Specifically, in order to determine the y-coordinate value yn of the first pattern coordinate system and the y-coordinate value yn of the second pattern coordinate system to be referenced for one Y-coordinate value Yn of the recording layout coordinate system, the same processes as in steps S104 to S107 are performed. Accordingly, the y-coordinate value yn to be referenced is determined for each of the first strip-shaped image B1 and the second strip-shaped image B2.

Subsequently, according to the present embodiment, the same flow as shown in FIG. 9 is performed. That is, on the basis of both the assignments determined by the reference x-coordinate value determination part 272 and the assignments determined by the reference y-coordinate value determination part 73, the basic pattern coordinate sets (xn, yn) to be referenced are uniquely determined. When the basic pattern coordinate sets (xn, yn) to be referenced are determined by the above-described method, the pixel value of one basic pattern coordinate set (xn, yn) determined to be referenced is laid out at a corresponding one of the recording layout coordinate sets (Xn, Yn). Accordingly, the ganging image data D3 as shown on the right side of FIG. 14 is generated.

As described above, by the data processing method according to the second embodiment, the ganging image data D3 similar to the ganging image data D3 shown according to the first embodiment is also generated, and it is thus possible to output the ganging image data D3 to the base material such as the film 9 to obtain the ganging image D3'. FIG. 14 shows an example of the ganging image data D3 generated by using the logical sum operation.

As described above, the data processing method according to the present embodiment includes the following b-1), b-2), and b-3). That is, in the b-1), the first basic pattern image D1 is arranged with being shifted by the first offset value S1 in the main scanning direction, and an area extending in the main scanning direction where no first basic pattern image D1 is arranged is made blank, thereby forming the first strip-shaped image B1 having the length L3 equivalent to the entire range in the main scanning direction of the recording layout coordinate sets. In the b-2), the second basic pattern image D2 is arranged with being shifted by the second offset value S2 in the main scanning direction, and an area extending in the main scanning direction where no second basic pattern image D2 is arranged is made blank, thereby forming the second strip-shaped image B2 having the same length L3 in the main scanning direction as the length of the first strip-shaped image B1. In the b-3), the logical sum of the first strip-shaped image B1 and the second strip-shaped image B2 is taken so as to determine the pixel value to be assigned to each recording layout coordinate set accordingly.

This makes it possible to appropriately determine, by simple calculation, the coordinate value xn in the main scanning direction of the first basic pattern image D1 or the second basic pattern image D2 to be assigned to one coordinate value Xn in the main scanning direction of the recording layout coordinate sets (Xn, Yn). Further, since the coordinate value xn in the main scanning direction of the first or second basic pattern image system to be assigned to each coordinate value Xn in the main scanning direction of the recording layout coordinate system is determined through a single logical sum operation, it is then only necessary to repeat the operation of determining the coordinate value yn in the sub-scanning direction of the first basic pattern image system and the second basic pattern image system to be assigned to each coordinate value Yn in the sub-scanning direction of the recording layout coordinate system (see steps S104 to S107 shown in FIG. 8).

### <3. Modification>

Although the preferred embodiments of the present invention have been described above, the present invention is not limited to the above-described embodiments, and various modifications may be made to the above-described embodiments without departing from the gist of the present invention.

According to the above-described embodiments, the data processing device 40 provided separately from the controller 30 is responsible for the above-described data processing, but the present invention is not limited to this configuration. That is, the controller 30 may perform the data processing according to the present invention instead.

According to the above-described embodiments, in the ganging image D3', the two types of basic pattern images D1', D2'are arranged side by side in the main scanning direction, but are not limited to this layout, and three or more types of basic pattern images may be arranged in the main scanning direction. In this case, three or more types of prints for flexible packaging will be printed out at the same time.

According to the above-described embodiments, as shown in FIG 6, the margin is formed at both ends of the ganging image D3' in the main scanning direction, but the margin is not essential.

The method for printing the ganging image D3' is not necessarily limited to the one-pass method, and a multi-pass method may be employed instead, for example.

According to the above-described embodiments, the ganging image data D3 is recorded on the surface of the film 9, but the base material on which a recording is performed is not limited to a film. For example, the base material on which a recording is performed may be paper, metal foil, or the like.

According to the above-described embodiments, the image recording part 20 is configured to eject ink droplets of each of cyan (C), magenda (M), yellow (Y), and black (K) colors, for example, but the present invention is not limited to this configuration. For example, the recording head 21 that ejects white ink or special color ink such as green, orange, and violet may be provided. In particular, a configuration for printing flexible packaging may be employed where the recording head 21 for white ink is disposed on the most downstream side of the recording heads 21 for C, M, Y, and K colors, printing is performed on a colorless and transparent film 9 with each of C, M, Y, and K colors, and then back printing is performed with white ink so as to cover the image printed with each color. Alternatively, a configuration may be employed where the recording head 21 for white ink is disposed on the most upstream side of the recording heads 21 for C, M, Y, and K colors, printing is performed on a non-transparent film 9 with white ink, and then surface printing in which patterns are printed on the white ink with each of C, M, Y, and K colors is performed. A predrying part to be used for drying previously printed ink may be provided between the recording head 21 for white ink and the recording heads 21 for each color such as C, M, Y, and K.

The order of data processes described above is an example and is not limited to the example. That is, the order of some of the data processes may be changed, or two data processes may be performed in parallel. Alternatively, some of the data processes may be omitted. For example, pieces of image data before being subjecting to the halftone processing are ganged together to form the ganging image data D3 having a high gradation value.

Further, the elements appearing in the above-described embodiments and the modification may be combined as needed to an extent where consistency is maintained and within the scope of the appended claims.

### Reference Signs List

- 1: printing apparatus (image recording apparatus)
- 9: film (base material)
- 10: conveyance mechanism
- 21: recording head
- 30: controller
- 40: data processing device
- 211: nozzle
- D1: first basic pattern image
- D2: second basic pattern image
- D3: ganging image data
- S1: first offset value
- S2: second offset value

## Claims

1. A data processing method for repeatedly recording a first basic pattern image (D1) and a second basic pattern image (D2) on a long strip-shaped base material (9), the method comprising steps of:
a) storing the first basic pattern image (D1) and the second basic pattern image (D2); and
b) calculating a pixel value to be recorded for each recording layout coordinate set indicative of a position on the base material (9),
wherein in the step b), a pixel value of a first basic pattern coordinate set indicative of a position on the first basic pattern image (D1) and a pixel value of a second basic pattern coordinate set indicative of a position on the second basic pattern image (D2) are each assigned to a corresponding one of the recording layout coordinate sets so as to cause the first basic pattern image (D1) and the second basic pattern image (D2) to be arranged side by side in a main scanning direction and to cause the first basic pattern image (D1) and the second basic pattern image (D2) to be each arranged continuously and repeatedly in a sub-scanning direction orthogonal to the main scanning direction,
wherein the step b) includes the steps of:
b-1) generating a first strip-shaped image (B1) by arranging the first basic pattern image (D1) shifted by a first offset value (S1) in the main scanning direction and setting the pixel values of an area extending in the main scanning direction where no first basic pattern image (D1) is arranged to zero, the first strip-shaped image (B1) having a length equivalent to an entire range in the main scanning direction of the recording layout coordinate sets;
b-2) generating a second strip-shaped image (B2) by arranging the second basic pattern image (D2) shifted by a second offset value (S2) greater than the first offset value (S1) in the main scanning direction and setting the pixel values of an area extending in the main scanning direction where no second basic pattern image (D2) is arranged to zero, the second strip-shaped image (B2) having a length equivalent to the entire range in the main scanning direction of the recording layout coordinate sets and having a same length in the main scanning direction as a length of the first strip-shaped image (B1); and
b-3) determining the pixel values to be each assigned to a corresponding one of the recording layout coordinate sets by taking a logical sum of the first strip-shaped image (B1) and the second strip-shaped image (B2).

2. The data processing method according to claim 1, wherein in the step b), the pixel values are each assigned to a corresponding one of the recording layout coordinate sets so as to cause the first basic pattern image (D1) and the second basic pattern image (D2) to be arranged without a gap in the main scanning direction.

3. A data recording method comprising a step of recording an image on the base material (9) on a basis of the pixel values each calculated for a corresponding one of the recording layout coordinate sets by the data processing method according to claim 1 or 2.

4. The data recording method according to claim 3, wherein an image is recorded on the base material (9) in a one-pass manner on the basis of the pixel values each calculated for a corresponding one of the recording layout coordinate sets.

5. A flexible packaging manufacturing method comprising manufacturing flexible packaging by dividing the base material (9) having an image recorded by the data recording method according to claim 3 or 4 along a boundary between the first basic pattern image (D1) and the second basic pattern image (D2) and then cutting out the first basic pattern image (D1) or the second basic pattern image (D2) one by one.

6. An image recording apparatus (1) comprising:
a recording head (21) configured to eject ink from a plurality of nozzles arranged in a main scanning direction;
a conveyance mechanism (10) configured to convey a long strip-shaped base material (9) in a sub-scanning direction orthogonal to the main scanning direction relative to the recording head (21); and
a data processing device (40) configured to generate recording data to be input to the recording head (21),
wherein the data processing device (40) includes
a storage part (61) configured to store a first basic pattern image (D1) and a second basic pattern image (D2), and
a calculation part (75) configured to calculate a pixel value to be recorded for each recording layout coordinate set indicative of a position on the base material (9),
wherein the calculation part (75) assigns each of a pixel value of a first basic pattern coordinate set indicative of a position on the first basic pattern image (D1) and a pixel value of a second basic pattern coordinate set indicative of a position on the second basic pattern image (D2) to a corresponding one of the recording layout coordinate sets so as to cause the first basic pattern image (D1) and the second basic pattern image (D2) to be arranged side by side in the main scanning direction and to cause the first basic pattern image (D1) and the second basic pattern image (D2) to be each arranged continuously and repeatedly in the sub-scanning direction,
wherein the calculation part (75) generates a first strip-shaped image (B1) by arranging the first basic pattern image (D1) shifted by a first offset value (S1) in the main scanning direction and sets the pixel values of an area extending in the main scanning direction where no first basic pattern image (D1) is arranged to zero, the first strip-shaped image (B1) having a length equivalent to an entire range in the main scanning direction of the recording layout coordinate sets,
wherein the calculation part (75) generates a second strip-shaped image (B2) by arranging the second basic pattern image (D2) shifted by a second offset value (S2) greater than the first offset value (S1) in the main scanning direction and sets the pixel values of an area extending in the main scanning direction where no second basic pattern image (D2) is arranged to zero, the second strip-shaped image (B2) having a length equivalent to the entire range in the main scanning direction of the recording layout coordinate sets and having a same length in the main scanning direction as a length of the first strip-shaped image,
wherein the calculation part (75) determines the pixel values to be each assigned to a corresponding one of the recording layout coordinate sets by taking a logical sum of the first strip-shaped image (B1) and the second strip-shaped image (B2).

## Patentansprüche

1. Datenverarbeitungsverfahren zum wiederholten Aufzeichnen eines ersten Basismusterbildes (D1) und eines zweiten Basismusterbildes (D2) auf einem länglichen streifenförmigen Basismaterial (9), wobei das Verfahren die folgenden Schritte umfasst:
a) Speichern des ersten Basismusterbildes (D1) und des zweiten Basismusterbildes (D2); und
b) Berechnen eines aufzuzeichnenden Pixelwertes für jeden Aufzeichnungslayoutkoordinatensatz, der eine Position auf dem Basismaterial (9) angibt,
wobei in dem Schritt b), ein Pixelwert eines ersten Basismusterkoordinatensatzes, der eine Position auf dem ersten Basismusterbild (D1) anzeigt, und ein Pixelwert eines zweiten Basismusterkoordinatensatzes, der eine Position auf dem zweiten Basismusterbild (D2) anzeigt, jeweils einem entsprechenden der Aufzeichnungslayoutkoordinatensätze zugewiesen werden, um zu bewirken, dass das erste Basismusterbild (D1) und das zweite Basismusterbild (D2) Seite an Seite in einer Hauptabtastrichtung angeordnet werden, und um zu bewirken, dass das erste Basismusterbild (D1) und das zweite Basismusterbild (D2) jeweils kontinuierlich und wiederholt in einer Nebenabtastrichtung orthogonal zu der Hauptabtastrichtung angeordnet werden,
wobei der Schritt b) die folgenden Schritte umfasst:
b-1) Erzeugen eines ersten streifenförmigen Bildes (B1) durch Anordnen des ersten Basismusterbildes (D1), das um einen ersten Versatzwert (S1) in der Hauptabtastrichtung verschoben ist, und Einstellen der Pixelwerte eines sich in der Hauptabtastrichtung erstreckenden Bereichs, in dem kein erstes Basismusterbild (D1) angeordnet ist, auf Null, wobei das erste streifenförmige Bild (B1) eine Länge hat, die einem gesamten Bereich in der Hauptabtastrichtung der Aufzeichnungslayoutkoordinatensätze entspricht;
b-2) Erzeugen eines zweiten streifenförmigen Bildes (B2) durch Anordnen des zweiten Basismusterbildes (D2), das um einen zweiten Versatzwert (S2), der größer als der erste Versatzwert (S1) ist, in der Hauptabtastrichtung verschoben ist, und Einstellen der Pixelwerte eines sich in der Hauptabtastrichtung erstreckenden Bereichs, in dem kein zweites Basismusterbild (D2) angeordnet ist, auf Null, wobei das zweite streifenförmige Bild (B2) eine Länge hat, die dem gesamten Bereich in der Hauptabtastrichtung der Aufzeichnungslayoutkoordinatensätze entspricht, und in der Hauptabtastrichtung die gleiche Länge wie eine Länge des ersten streifenförmigen Bildes (B1) hat; und
b-3) Bestimmen der Pixelwerte, die jeweils einem entsprechenden der Aufzeichnungslayoutkoordinatensätze zuzuordnen sind, durch Bilden einer logischen Summe des ersten streifenförmigen Bildes (B1) und des zweiten streifenförmigen Bildes (B2).

2. Datenverarbeitungsverfahren nach Anspruch 1, wobei im Schritt b) die Pixelwerte jeweils einem entsprechenden der Aufzeichnungslayoutkoordinatensätze zugewiesen werden, um zu bewirken, dass das erste Basismusterbild (D1) und das zweite Basismusterbild (D2) ohne Lücke in der Hauptabtastrichtung angeordnet werden.

3. Datenaufzeichnungsverfahren, das einen Schritt der Aufzeichnung eines Bildes auf dem Basismaterial (9) auf der Grundlage der Pixelwerte umfasst, die jeweils für einen entsprechenden der Aufzeichnungslayoutkoordinatensätze durch das Datenverarbeitungsverfahren nach Anspruch 1 oder 2 berechnet werden.

4. Datenaufzeichnungsverfahren nach Anspruch 3, bei dem ein Bild auf der Grundlage der Pixelwerte, die jeweils für einen entsprechenden der Aufzeichnungslayoutkoordinatensätze berechnet werden, in einem Durchgang auf dem Basismaterial (9) aufgezeichnet wird.

5. Verfahren zur Herstellung einer flexiblen Verpackung, umfassend die Herstellung einer flexiblen Verpackung durch Teilen des Basismaterials (9) mit einem durch das Datenaufzeichnungsverfahren nach Anspruch 3 oder 4 aufgezeichneten Bild entlang einer Grenze zwischen dem ersten Basismusterbild (D1) und dem zweiten Basismusterbild (D2) und anschließendes Ausschneiden des ersten Basismusterbildes (D1) oder des zweiten Basismusterbildes (D2), eines nach dem anderen.

6. Eine Bilderzeugungsvorrichtung (1) aufweisend:
einem Aufzeichnungskopf (21), der eingerichtet ist, dass Tinte aus einer Vielzahl von Düsen auszustoßen, die in einer Hauptabtastrichtung angeordnet sind;
einen Transportmechanismus (10), der eingerichtet ist, dass er ein längliches streifenförmiges Basismaterial (9) in einer Nebenabtastrichtung orthogonal zur Hauptabtastrichtung relativ zum Aufzeichnungskopf (21) zu transportieren; und
eine Datenverarbeitungsvorrichtung (40), die eingerichtet ist, in den Aufzeichnungskopf (21) einzugebende Aufzeichnungsdaten zu erzeugen,
wobei die Datenverarbeitungsvorrichtung (40) umfasst
einen Speicherteil (61), der eingerichtet ist, ein erstes Basismusterbild (D1) und ein zweites Basismusterbild (D2) zu speichern, und
einen Berechnungsteil (75), der eingerichtet ist, einen aufzuzeichnenden Pixelwert zu berechnen, der für jeden Aufzeichnungslayoutkoordinatensatz aufzuzeichnen ist, der eine Position auf dem Basismaterial (9) angibt,
wobei der Berechnungsteil (75) jeden Pixelwert eines ersten Basismusterkoordinatensatzes, der eine Position auf dem ersten Basismusterbild (D1) angibt, und einen Pixelwert eines zweiten Basismusterkoordinatensatzes, der eine Position auf dem zweiten Basismusterbild (D2) angibt, einem entsprechenden der Aufzeichnungslayoutkoordinatensätze zuweist, um zu bewirken, dass das erste Basismusterbild (D1) und das zweite Basismusterbild (D2) Seite an Seite in der Hauptabtastrichtung angeordnet werden, und um zu bewirken, dass das erste Basismusterbild (D1) und das zweite Basismusterbild (D2) jeweils kontinuierlich und wiederholt in der Nebenabtastrichtung angeordnet werden,
wobei der Berechnungsteil (75) ein erstes streifenförmiges Bild (B1) durch Anordnen des ersten Basismusterbildes (D1) erzeugt, das um einen ersten Versatzwert (S1) in der Hauptabtastrichtung verschoben ist, und Einstellen der Pixelwerte eines sich in der Hauptabtastrichtung erstreckenden Bereichs, in dem kein erstes Basismusterbild (D1) angeordnet ist, auf Null, wobei das erste streifenförmige Bild (B 1) eine Länge hat, die einem gesamten Bereich in der Hauptabtastrichtung entspricht,
wobei der Berechnungsteil (75) ein zweites streifenförmiges Bild (B2) durch Anordnen des zweiten Basismusterbildes (D2) erzeugt, das um einen zweiten Versatzwert (S2), der größer als der erste Versatzwert (S 1) ist, in der Hauptabtastrichtung verschoben ist, und Einstellen der Pixelwerte eines sich in der Hauptabtastrichtung erstreckenden Bereichs, in dem kein zweites Basismusterbild (D2) angeordnet ist, auf Null, wobei das zweite streifenförmige Bild (B2) eine Länge hat, die dem gesamten Bereich in der Hauptabtastrichtung der Aufzeichnungslayoutkoordinatensätze entspricht, und in der Hauptabtastrichtung die gleiche Länge wie eine Länge des ersten streifenförmigen Bildes (B1) hat,
wobei der Berechnungsteil (75) die Pixelwerte, die jeweils einem entsprechenden der Aufzeichnungslayoutkoordinatensätze zuzuordnen sind, durch Bilden einer logischen Summe des ersten streifenförmigen Bildes (B1) und des zweiten streifenförmigen Bildes (B2) bestimmt.

## Revendications

1. Procédé de traitement de données pour l'enregistrement répétitif d'une première image à motif de base (D1) et d'une deuxième image à motif de base (D2) sur un matériau de base en forme de bande longue (9), le procédé comprenant des étapes consistant à :
a) stocker la première image à motif de base (D1) et la deuxième image à motif de base (D2) ; et
b) calculer une valeur de pixel à enregistrer pour chaque ensemble de coordonnées de disposition d'enregistrement indicative d'une position sur le matériau de base (9),
à l'étape b), une valeur de pixel d'un premier ensemble de coordonnées de motif de base indicatif d'une position sur la première image à motif de base (D1) et une valeur de pixel d'un deuxième ensemble de coordonnées de motif de base indicatif d'une position sur la deuxième image à motif de base (D2) étant chacune affectées à l'un correspondant des ensembles de coordonnées de disposition d'enregistrement de manière à amener la première image à motif de base (D1) et la deuxième image à motif de base (D2) à être disposées côte à côte dans une direction de balayage principale et à amener la première image à motif de base (D1) et la deuxième image à motif de base (D2) à être chacune disposées de manière continue et répétitive dans une direction de sous-balayage orthogonale à la direction de balayage principale,
l'étape b) comprenant les étapes consistant à :
b-1) générer une première image en forme de bande (B1) en disposant la première image à motif de base (D1) décalée d'une première valeur de décalage (S1) dans la direction de balayage principale et en fixant à zéro les valeurs de pixel d'une zone s'étendant dans la direction de balayage principale où aucune première image à motif de base (D1) n'est disposée, la première image en forme de bande (B1) ayant une longueur équivalente à une plage entière dans la direction de balayage principale des ensembles de coordonnées de disposition d'enregistrement ;
b-2) générer une deuxième image en forme de bande (B2) en disposant la deuxième image à motif de base (D2) décalée d'une deuxième valeur de décalage (S2) supérieure à la première valeur de décalage (S1) dans la direction de balayage principale et en fixant à zéro les valeurs de pixel d'une zone s'étendant dans la direction de balayage principale où aucune deuxième image à motif de base (D2) n'est disposée, la deuxième image en forme de bande (B2) ayant une longueur équivalente à la plage entière dans la direction de balayage principale des ensembles de coordonnées de disposition d'enregistrement et ayant une même longueur dans la direction de balayage principale qu'une longueur de la première image en forme de bande (B1) ; et
b-3) déterminer les valeurs de pixel à attribuer chacune à l'un correspondant des ensembles de coordonnées de disposition d'enregistrement en faisant une somme logique de la première image en forme de bande (B1) et de la deuxième image en forme de bande (B2).

2. Procédé de traitement de données selon la revendication 1, à l'étape b), les valeurs de pixel étant chacune affectées à l'un correspondant des ensembles de coordonnées de disposition d'enregistrement de manière à amener la première image à motif de base (D1) et la deuxième image à motif de base (D2) à être disposées sans un espace dans la direction de balayage principale.

3. Procédé d'enregistrement de données, comprenant une étape consistant à enregistrer une image sur le matériau de base (9) sur une base des valeurs de pixel calculées chacune pour l'un correspondant des ensembles de coordonnées de disposition d'enregistrement par le procédé de traitement de données selon la revendication 1 ou 2.

4. Procédé d'enregistrement de données selon la revendication 3, une image étant enregistrée sur le matériau de base (9) d'une manière à une seule passe sur la base des valeurs de pixel calculées chacune pour l'un correspondant des ensembles de coordonnées de disposition d'enregistrement.

5. Procédé de fabrication de boîtier souple, comprenant la fabrication d'un boîtier souple en divisant le matériau de base (9) ayant une image enregistrée par le procédé d'enregistrement de données selon la revendication 3 ou 4 le long d'une limite entre la première image à motif de base (D1) et la deuxième image à motif de base (D2), puis en découpant la première image à motif de base (D1) ou la deuxième image à motif de base (D2) une par une.

6. Appareil d'enregistrement d'image (1), comprenant :
une tête d'enregistrement (21) configurée pour éjecter de l'encre à partir d'une pluralité de buses disposées dans une direction de balayage principale ;
un mécanisme de transport (10) configuré pour transporter un matériau de base en forme de bande longue (9) dans une direction de sous-balayage orthogonale à la direction de balayage principale par rapport à la tête d'enregistrement (21) ; et
un dispositif de traitement de données (40) configuré pour générer des données d'enregistrement à introduire dans la tête d'enregistrement (21),
le dispositif de traitement de données (40) comprenant
une partie de stockage (61) configurée pour stocker une première image à motif de base (D1) et une deuxième image à motif de base (D2) ; et
un partie de calcul (75) configurée pour calculer une valeur de pixel à enregistrer pour chaque ensemble de coordonnées de disposition d'enregistrement indicatif d'une position sur le matériau de base (9),
la partie de calcul (75) affectant chacune parmi une valeur de pixel d'un premier ensemble de coordonnées de motif de base, indicatif d'une position sur la première image à motif de base (D1) et une valeur de pixel d'un deuxième ensemble de coordonnées de motif de base, indicatif d'une position sur la deuxième image à motif de base (D2), à l'un correspondant des ensembles de coordonnées de disposition d'enregistrement de manière à amener la première image à motif de base (D1) et la deuxième image à motif de base (D2) à être disposées côte à côte dans la direction de balayage principale et à amener la première image à motif de base (D1) et la deuxième image à motif de base (D2) à être chacune disposées de manière continue et répétitive dans la direction de sous-balayage,
la partie de calcul (75) générant une première image en forme de bande (B1) en disposant la première image à motif de base (D1) décalée d'une première valeur de décalage (S1) dans la direction de balayage principale et fixant à zéro les valeurs de pixel d'une zone s'étendant dans la direction de balayage principale où aucune première image à motif de base (D1) n'est disposée, la première image en forme de bande (B1) ayant une longueur équivalente à une plage entière dans la direction de balayage principale des ensembles de coordonnées de la disposition d'enregistrement,
la partie de calcul (75) générant une deuxième image en forme de bande (B2) en disposant la deuxième image à motif de base (D2) décalée d'une deuxième valeur de décalage (S2) supérieure à la première valeur de décalage (S1) dans la direction de balayage principale et fixant à zéro les valeurs de pixel d'une zone s'étendant dans la direction de balayage principale où aucune deuxième image à motif de base (D2) n'est disposée, la deuxième image en forme de bande (B2) ayant une longueur équivalente à la plage entière dans la direction de balayage principale des ensembles de coordonnées de la disposition d'enregistrement et ayant une même longueur dans la direction de balayage principale qu'une longueur de la première image en forme de bande,
la partie de calcul (75) déterminant les valeurs de pixel à attribuer chacune à l'un correspondant des ensembles de coordonnées de disposition d'enregistrement en faisant une somme logique de la première image en forme de bande (B1) et de la deuxième image en forme de bande (B2).
